# FASCICULE DE BREVET EUROPEEN

(11) **EP 2 562 451 B1**
(45) Date de publication et mention de la délivrance du brevet: **23.03.2016**
(21) Numéro de dépôt: 12305935.4
(22) Date de dépôt: 30.07.2012
(51) Int. Cl.: F16K 31/04, F16K 31/48

(54) **Vanne trois-voies**
Dreiwegeventil
Three-way valve

(30) Priorité: 23.08.2011 FR 1157465
(43) Date de publication de la demande: 27.02.2013
(60) Demande divisionnaire: 15185939.4
(73) Titulaire: Valeo Systèmes de Contrôle Moteur, 95800 Cergy (FR)
(72) Inventeur: Hodebourg, Grégory, Sartrouville 78500 (FR); Adenot, Sébastien, 95300 Pontoise (FR)

(56) Documents cités:
- EP-A2- 0 903 522
- EP-A2- 1 223 373
- WO-A1-2009/106727
- DE-A1- 4 240 688

## Description

Le domaine de la présente invention est celui de l'automobile et, plus particulièrement, celui des équipements pour l'alimentation du moteur.

Un moteur thermique de véhicule automobile comporte une chambre de combustion, généralement formée par une pluralité de cylindres, dans laquelle un mélange de carburant et d'air est brûlé pour générer le travail du moteur. L'air peut être comprimé ou non, selon que le moteur comporte ou pas un turbocompresseur. Dans le cas d'un moteur avec turbocompresseur, l'air, comprimé par le compresseur, est admis dans le moteur où il est brûlé avec le carburant puis évacué par les canalisations d'échappement. Les gaz d'échappement entraînent une turbine, solidaire du compresseur et formant avec lui le turbocompresseur.

L'air d'admission peut par ailleurs être mélangé à des gaz d'échappement ; on parle de gaz d'échappement recirculés et d'une circulation des gaz le long d'une boucle dite boucle EGR (pour Exhaust gas recirculation ou recirculation des gaz d'échappement). Les gaz admis dans la chambre de combustion sont alors dénommés gaz d'admission. On obtient de la sorte une diminution des émissions polluantes, en particulier en matière d'oxydes d'azote.

La recirculation des gaz d'échappement peut être dite "basse pression", lorsqu'elle est faite sur des gaz d'échappement prélevés après la turbine et réintroduits avant le compresseur, ou "haute pression", lorsqu'elle est faite avec des gaz prélevés avant la turbine et réintroduits après le compresseur. A titre d'exemple, la recirculation basse pression est principalement utilisée, sur un moteur à essence, pour diminuer la consommation de carburant et obtenir un meilleur rendement moteur.

Les gaz sont donc amenés par diverses canalisations et le contrôle de leur circulation est fait grâce à des vannes, qui autorisent, inhibent ou régulent leurs mouvements dans ces canalisations. Dans le cas d'une boucle EGR, il a déjà été proposé des vannes dite "trois-voies". Une telle vanne peut être disposée en amont du compresseur du turbocompresseur, c'est-à-dire sur la canalisation d'admission du mélange, où elle régule la quantité d'air circulant dans ladite canalisation et la quantité de gaz d'échappement admise dans celle-ci. On dit alors que la vanne est disposée du côté froid du moteur car elle placée sur la ligne d'admission plutôt que sur la ligne d'échappement

Pour une vanne trois-voies disposée du côté froid, plusieurs modes opératoires de la vanne, et donc du moteur, peuvent être envisagés. Le moteur peut ne recevoir que de l'air frais, sans gaz d'échappement recirculés. Le moteur peut aussi recevoir de l'air frais mélangé à une partie des gaz d'échappement, la différence de pression entre l'échappement et l'admission du moteur étant alors suffisante pour assurer la recirculation des gaz d'échappement. Quand la différence de pression n'est pas suffisante pour la recirculation des gaz d'échappement et pour assurer le bon taux EGR, on peut créer une contre-pression par étranglement de la voie d'échappement en aval de la boucle EGR, pour ainsi forcer une partie des gaz d'échappement vers la voie d'admission du moteur. Cette solution, par sa complexité, n'est toutefois pas très satisfaisante et il est préférable d'utiliser la boucle EGR de la façon suivante.

Le débit d'air frais dans la voie d'arrivée de l'air de la vanne EGR étant maximum, on ouvre progressivement la voie des gaz EGR dans la vanne et, avant que le débit des gaz EGR dans la vanne n'augmente plus, on ferme progressivement la voie d'arrivée de l'air frais pour continuer de faire croître le débit des gaz EGR, suivant une courbe monotone croissante.

Une demande de brevet a été déposée par la demanderesse, sous le numéro WO 2009/106727, qui décrit une vanne trois-voies à deux volets dans laquelle les deux volets sont disposés dans les deux voies d'entrée de la vanne et sont actionnés avec un décalage temporel par un même moyen d'actionnement.

Dans cette configuration les volets sont entraînés par des moyens d'actionnement entraînés en rotation par des moyens de commande et ils sont rappelés vers leur position de repos par des ressorts de rappel montés, soit sur le volet lui-même, soit sur son moyen d'actionnement. Dans le cas d'un défaut sur le ressort de rappel du volet d'air ou d'un point dur sur sa cinématique de pivotement, ce volet d'air risque de rester en position fermée, ce qui détériore les performances du moteur. Il convient donc de prévoir un dispositif permettant de conserver le fonctionnement du moteur, même dans le cas d'une rupture du ressort de rappel.

La présente invention a pour but de remédier à ces inconvénients. A cet effet, l'invention a pour objet une vanne selon la revendication 1.

On peut ainsi ramener le premier volet dans une position permettant au moteur du véhicule de continuer à fonctionner, même en cas de défaillance du ressort de rappel. Seule la fonction de réduction des émissions polluantes sera éventuellement affectée, le véhicule pouvant par contre poursuivre sa route le temps d'être réparé.

Selon différents modes de réalisation, qui pourront être pris ensemble ou séparément :
- lesdites première et seconde positions du premier volet sont des positions d'ouverture et de fermeture de la première voie,
- le premier moyen d'actionnement comporte un secteur de couronne dentée.

Selon un premier mode de mise en oeuvre :
- le premier moyen d'actionnement comporte en outre une roue de pilotage, liée en rotation au premier volet et libre en rotation par rapport audit secteur de couronne dentée, ladite roue de pilotage étant apte à être entraînée par ledit secteur de couronne dentée, lorsque ledit premier volet passe de sa première position à sa seconde position, et par lesdits moyens de rappel, lorsque ledit volet est actionné en retour,
- ledit secteur de couronne dentée comprend une butée de rappel, apte à coopérer avec une butée de rappel de la roue de pilotage dans le cas d'une défaillance desdits moyens de rappel,
- ledit secteur de couronne dentée comprend une butée d'entrainement, apte à coopérer avec une butée d'entrainement de la roue de pilotage, lorsque ledit premier volet passe de sa première position à sa seconde position, lesdites butées de rappel et d'entrainement de la roue de pilotage prenant appui l'une sur l'autre.

Selon un autre mode de mise en oeuvre :
- lesdits moyens d'entrainement en retour comprennent une butée de retour formée par une extrémité dudit secteur.
- ledit premier moyen d'actionnement comprend en outre un doigt circulant dans une échancrure formée dans le secteur de couronne dentée, la butée de retour étant positionnée en vis-à-vis dudit doigt.

Selon un aspect de l'invention, le moyen d'entrainement en retour positionne le premier volet en retrait par rapport à sa première position lorsque les moyens de commande sont actionnés pour pallier une défaillance desdits moyens de rappel. On évite ainsi de possibles interférences, en fonctionnement normal, entre les différentes butées.

Selon un aspect de l'invention, ladite vanne est du type trois-voies et comprend un second volet, disposé dans une seconde des trois voies de la vanne, et lesdits moyens de commande sont prévus communs pour les deux volets, ladite vanne comprenant en outre des second moyens d'actionnement, lesdits seconds moyens d'actionnement étant agencés pour être commandés par les moyens de commande communs et entraîner le second volet tel que, durant ledit premier temps, les moyens de commande communs font pivoter le second volet d'une première position vers une seconde position.

Les premier et second moyens d'actionnement pourront en outre agencés pour que, dans un second temps, lesdits moyens de commande, tout en continuant de faire pivoter le second volet de sa première position vers sa seconde position par l'intermédiaire du second moyen d'actionnement commencent à faire pivoter le premier volet de sa première position vers sa seconde position par l'intermédiaire du premier moyen d'actionnement.

Les volets sont disposés, par exemple, dans deux voies d'entrée de la vanne et celle-ci est une vanne de boucle EGR pour côté froid, reliée au collecteur d'admission d'un moteur à combustion interne d'un véhicule automobile.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique d'une boucle EGR installée sur un moteur turbocompressé, selon l'art antérieur ;
- les figures 2a à 2d sont des vues schématiques montrant, de façon générique, le fonctionnement d'une vanne trois-voies de la boucle EGR, avec les différentes positions prises par ses volets ;
- les figures 3 à 5 montrent les dispositifs de commande des deux volets d'un premier mode de mise en oeuvre d'une vanne trois-voies selon l'invention, dans les positions correspondant aux cas représentés respectivement sur les figures 2a, 2b et 2d ;
- la figure 6 est un schéma de principe montrant la vanne trois-voies des figures 3 à 5, en fonctionnement normal, dans la position correspondant à la figure 2a ;
- la figure 7 est un schéma de principe montrant la vanne trois-voies précédente, en fonctionnement normal, dans la position correspondant à la figure 2d,
- la figure 8 est un schéma de principe montrant la vanne trois-voies précédente, dans la position correspondant à la figure 2d, dans le cas d'un premier type de défaillance,
- la figure 9 est un schéma de principe montrant la vanne trois-voies précédente, dans une position de repli consécutive à un second type de défaillance, et
- la figure 10 est une vue en perspective partielle d'un second mode de mise en oeuvre d'une vanne trois voies selon l'invention.

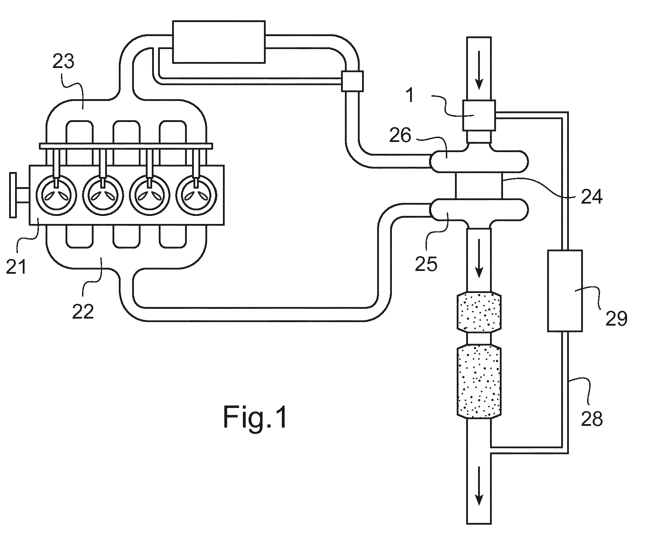

En se référant à la figure 1, on voit un moteur à combustion interne 21 d'un véhicule automobile, muni d'une boucle de recirculation des gaz d'échappement (EGR), comprenant un collecteur d'admission 23 du moteur pour recevoir l'air et les gaz d'échappement provenant d'un compresseur 26 d'un turbo-compresseur 24, un collecteur d'échappement 22 des gaz de combustion, une turbine 25 du turbo-compresseur 24 et la boucle EGR 28, avec un refroidisseur 29 et la vanne trois-voies 1 basse pression qui est disposée en amont du compresseur 26 du turbo-compresseur 24. Cette vanne trois-voies est reliée au compresseur par sa sortie et comporte deux entrées pour recevoir de l'air frais (voie Air) et les gaz d'échappement refroidis (voie EGR ou voie des gaz), en un mélange dont la pression est augmentée par le compresseur 26.

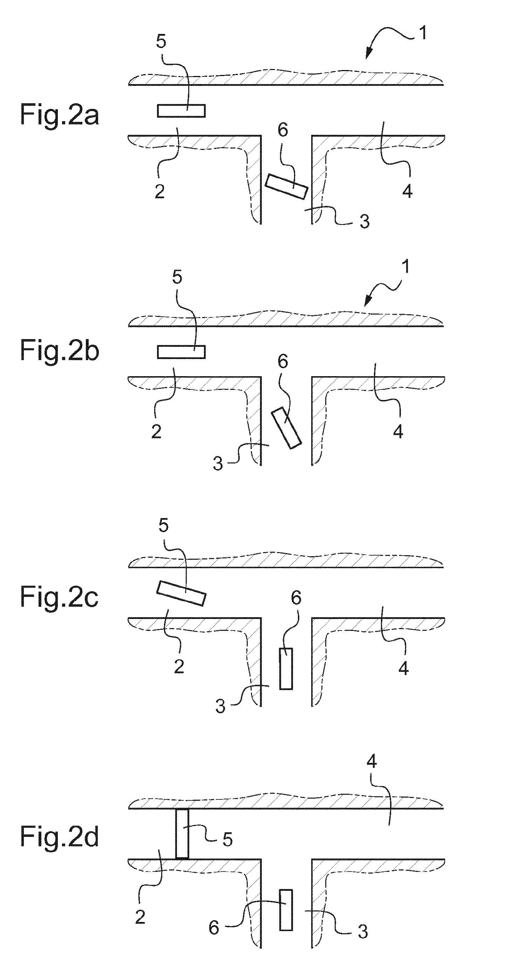

Sur les figures 2a à 2d est représentée schématiquement la vanne trois-voies 1, avec son entrée d'air 2, son entrée de gaz d'échappement recirculés 3 et une sortie du mélange d'air et de gaz 4. La vanne 1 est ici une vanne à deux volets, un volet 5 dans la voie d'entrée d'air 2 et un volet 6 dans la voie d'entrée de gaz 3. Le fonctionnement de la vanne, lorsqu'il s'agit de mettre en service la boucle EGR est le suivant : au départ, le volet d'air 5 est dans une position angulaire (0°) permettant un débit d'air maximal dans la voie 2 et le volet d'arrivée des gaz 6 est dans une position angulaire (90°) obturant la voie 3. Cette situation est celle dans laquelle fonctionne le moteur, par exemple à l'arrêt au ralenti.

La mise en service de la boucle se traduit par un début de pivotement du volet d'arrivée des gaz 6, sans que le volet d'air 5 ne pivote, ouvrant ainsi progressivement la voie 3 aux gaz d'échappement EGR (figure 2a). Le volet d'air 5 restant toujours dans la même position d'ouverture maximale de l'entrée d'air 2, le volet des gaz 6 continue de pivoter pour considérablement ouvrir la voie des gaz 3 (figure 2b). Dans une certaine position angulaire du volet des gaz 6, ici de 35°, c'est-à-dire après une rotation de 55°, le débit des gaz EGR dans la voie 3 n'augmente pratiquement plus et, tout en continuant de faire pivoter le volet des gaz 6, on commence alors à faire pivoter le volet d'air 5 pour fermer la voie d'arrivée d'air 2 et ainsi forcer le moteur à aspirer d'avantage de gaz EGR (figure 2c). Cette phase peut se poursuivre jusqu'à une position extrême où le volet des gaz 6 atteint la position angulaire (0°) d'ouverture maximale de la voie d'entrée de gaz 3 et où le volet d'air se trouve dans la position angulaire (90°) d'obturation de la voie d'entrée d'air 2 (figure 2d).

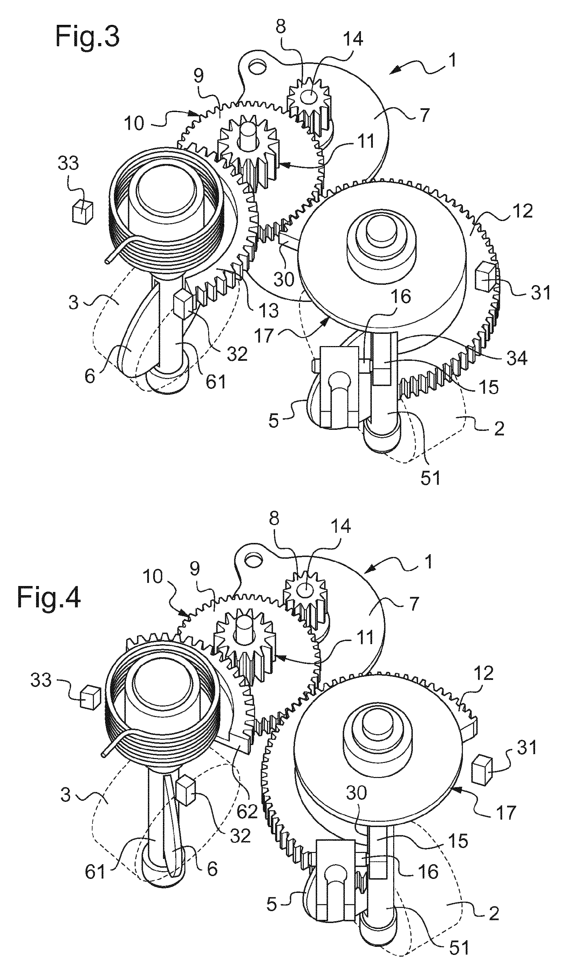

Une cinématique permettant la mise en oeuvre d'une vanne trois-voies 1 selon l'invention, fonctionnant selon le principe défini ci-dessus, va maintenant être décrite en référence aux figures 3 à 5.

La cinématique de la vanne trois-voies 1 comporte un engrenage s'étendant, ici, entre un moteur à courant continu 7 et deux arbres 51, 61 d'entraînement en rotation, respectivement, du volet d'air 5 et du volet des gaz 6. Les deux arbres 51, 61 s'étendent parallèlement l'un à l'autre. De l'arbre 14 du moteur électrique 7 est solidaire un pignon 8 d'entraînement d'une roue dentée intermédiaire 9 portant une denture périphérique 10 et une denture centrale 11. La denture périphérique 10 de la roue intermédiaire engrène avec une couronne dentée 12 d'entraînement en rotation du volet d'air 5. La couronne dentée 12 est libre en rotation par rapport à l'axe 51 du volet 5. L'entraînement en rotation de ce volet 5 par la couronne 12 se fait par l'intermédiaire d'un doigt d'entraînement 15 qui est, lui, solidaire en rotation de l'axe 51 du volet 5. Ce doigt 15 est disposé au repos contre une butée réglable, ou butée basse air 16, qui est solidaire du corps de la vanne (non représenté). La couronne 12 comporte une échancrure angulaire 17 adaptée pour permettre la rotation libre de la couronne 12 sur une portion angulaire définie, sans entraîner le doigt 15, et donc sans entraîner le volet 5. C'est lorsque la couronne 12 est entraînée en rotation au-delà de cette portion angulaire qu'un premier bord de l'échancrure 17, formant une butée d'entraînement 30, entraîne alors le doigt 15. Comme cela sera développé plus loin, le bord opposé de l'échancrure 17 de la couronne 12 forme également une butée, dite butée de retour 34.

La denture centrale 11 de la roue intermédiaire 9 engrène quant à elle avec une couronne dentée 13 d'entraînement en rotation du volet des gaz 6. La couronne dentée 13 est solidaire en rotation de l'axe 61 du volet 6. Elle ne s'étend circulairement que sur une portion angulaire, dont les extrémités présentent des faces radiales aptes à coopérer avec des pièces solidaires du corps de la vanne, qui forment des butées pour le déplacement circulaire de la couronne dentée 13, comme cela sera expliqué plus loin.

En mode normal, sous l'action du moteur 7, le volet 6 est donc entraîné en rotation directement par la rotation de la couronne 13, tandis que le volet 5 est entraîné en rotation seulement lorsque la couronne 12 entraîne en rotation le doigt 15.

Dans l'exemple considéré, le moteur électrique 7, par son pignon 8 lorsqu'il est entraîné en rotation dans le sens contraire des aiguilles d'une montre, entraîne la roue intermédiaire 9 en rotation dans le sens des aiguilles d'une montre. A son tour, la roue 9, par ses dentures 10, 11 entraîne, dans le sens contraire des aiguilles d'une montre, les deux couronnes dentées 12, 13, qui sont donc entraînées en rotation par la même roue intermédiaire 9, mais via deux dentures différentes 10, 11. A titre d'exemple, le rapport d'engrenage entre l'arbre 14 du moteur électrique 7 et le volet des gaz 6 est ici d'environ 16, alors que le rapport entre l'arbre 14 et le volet d'air 5 lorsqu'il est entraîné est d'environ 7.

Le mécanisme de déphasage de la fermeture du volet d'air 5 va maintenant être décrit, en relation avec les figures 3, 4 et 5 qui montrent les couronnes et roues dentées à différentes étapes de la rotation du pignon 8.

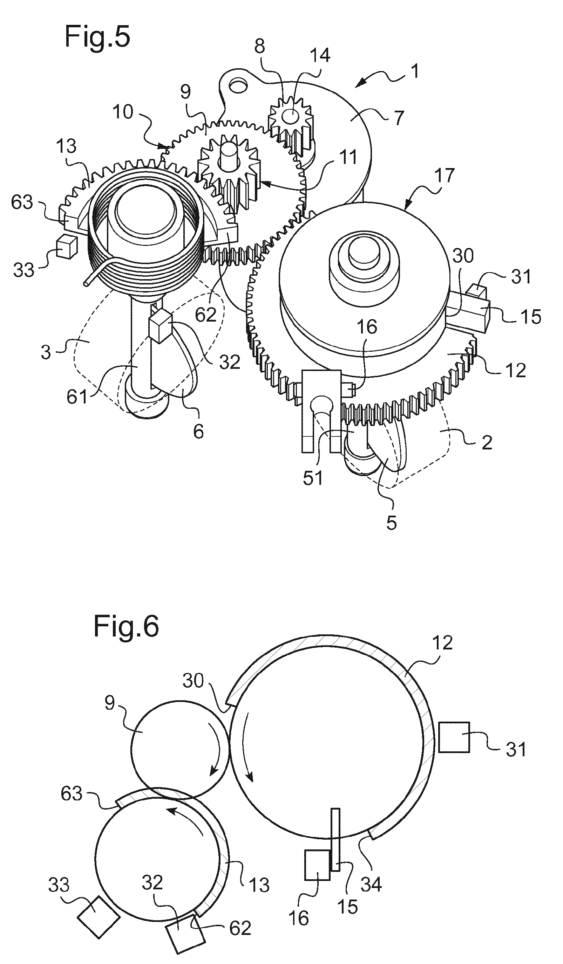

De la figure 3 à la figure 4, les couronnes 12 et 13 sont entraînées dans le sens contraire des aiguilles d'une montre de façon à provoquer l'ouverture du volet des gaz 6 tandis que le volet d'air 5 reste immobile et ce grâce à l'échancrure angulaire 17. Sur la position de la figure 4, le bord de cette échancrure 17 qui forme la butée d'entrainement 30, vient en contact avec le doigt 15. La rotation de la couronne 12 se poursuit alors en direction de la position représentée sur la figure 5, le doigt 15 (et par conséquent le volet 5) étant alors entraîné en rotation par la butée d'entraînement 30. Le volet d'air 5 se ferme donc avec un déphasage temporel par rapport au volet des gaz 6, grâce à la présence de l'échancrure 17.

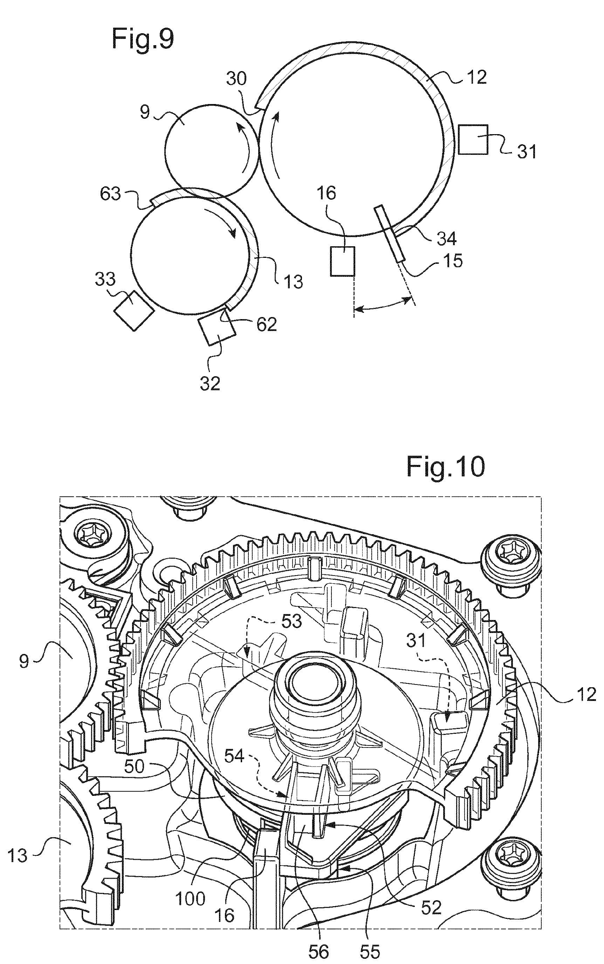

Sur les figures 3 à 5 sont également représentées plusieurs butées associées aux couronnes dentées 12 et 13. On trouve sur la voie Air, une butée haute air 31, solidaire du corps de la vanne 1, qui correspond à la position extrême qu'atteint le doigt 15 lorsque le volet d'air 5 se trouve dans la position plein fermée. Le doigt 15, en fonctionnement normal, se déplace ainsi, dans un sens sous l'action de la butée d'entraînement 30 et dans l'autre sens sous l'action d'un ressort de rappel (non représenté), entre la butée basse air 16 et la butée haute air 31. Ce déplacement correspond à une rotation du volet d'air 5 entre la position plein ouvert et la position plein fermé. On remarque également sur la figure 3 que la couronne dentée 12 d'entraînement du volet air 5 et la butée de retour 34 ne viennent pas en contact avec le doigt d'entraînement 15, qui est rappelé contre la butée basse air 16, quand la vanne trois-voies est dans la configuration de la figure 2a (volet d'air ouvert et volet des gaz fermé). La cinématique des roues et couronnes dentées est telle qu'elle laisse subsister un jeu entre la butée de retour 34 et la butée basse air qui est supérieur à l'épaisseur du doigt d'entraînement 15. L'utilité de ce jeu sera détaillée plus loin, en relation avec la figure 9.

Parallèlement on trouve, sur la voie EGR, deux butées, une butée basse gaz 32 et une butée haute gaz 33 associées aux positions extrêmes que peuvent prendre, respectivement, la première 62 et la seconde 63 extrémité de la couronne dentée 13 d'entraînement du volet des gaz 6.

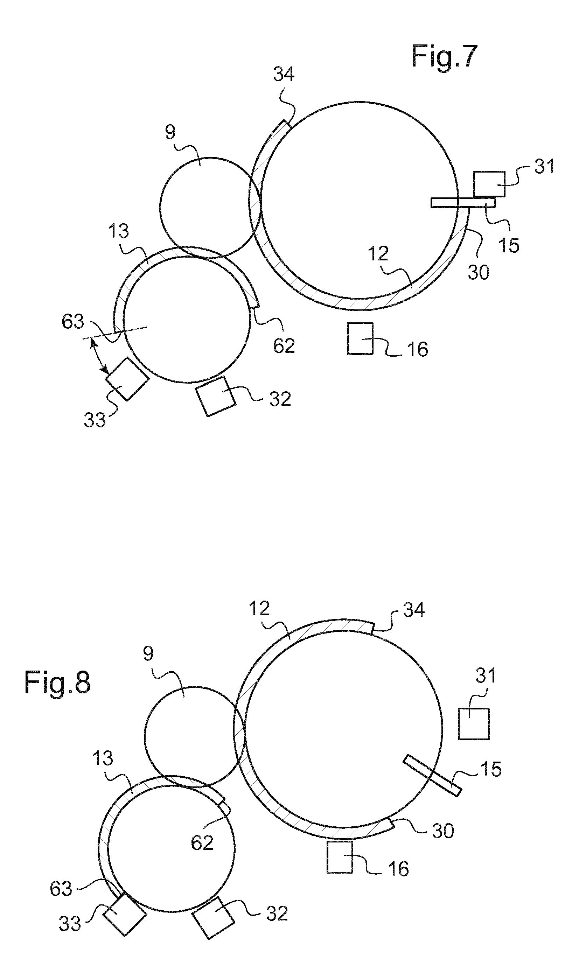

La fonction des butées ci-dessus sera mieux expliquée, en relation avec les figures 6 à 9 qui sont représentatives du fonctionnement d'une vanne trois-voies selon l'invention. Sur ces figures la denture centrale 11 et la denture périphérique 10 de la roue dentée intermédiaire 9 ont été confondues pour des raisons de simplification du dessin. La figure 6 correspond à un fonctionnement de la vanne 1 en mode normal, dans la configuration de la figure 2a, c'est-à-dire volet d'air 5 plein ouvert et volet des gaz 6 plein fermé. La figure 7 correspond à un fonctionnement de la vanne 1 en mode normal, dans la configuration de la figure 2d, c'est-à-dire volet d'air 5 plein fermé et volet des gaz 6 plein ouvert. Quant à la figure 8, elle représente un premier mode de fonctionnement défectueux dans lequel le volet d'air 5 n'est plus entraîné, le doigt 15 n'atteignant pas la butée haute air 31, et dans lequel le volet des gaz 6 dépasse la position plein ouvert, la seconde extrémité 63 de sa couronne dentée 13 arrivant alors en butée contre la butée haute gaz 33. Enfin, la figure 9 représente un second mode de fonctionnement défectueux, dans lequel le volet d'air 5 n'est plus rappelé vers la position plein ouvert, le ressort de rappel étant supposé cassé ou bien un point dur dans la cinématique de la voie Air empêchant le retour du doigt 15 sous la simple force exercée par ce ressort.

Le fonctionnement de l'invention est décrit, tout d'abord dans le mode normal en référence aux figures 6 et 7, puis dans le mode défectueux correspondant à la figure 9.

La figure 6 représente la situation des éléments de la vanne 1 dans la configuration de la figure 2a, c'est-à-dire avant l'introduction de gaz recirculés. La roue dentée intermédiaire 9 a amené la première extrémité 62 de la couronne 13 d'entraînement du volet des gaz en butée contre la butée basse gaz 32, ce qui correspond à la position plein fermée pour le volet des gaz 6. Parallèlement la couronne dentée 12 d'entraînement du volet d'air est dans une position telle que sa butée d'entraînement 30 est éloignée du doigt d'entraînement 15 ; celui-ci repose en appui contre la butée réglable 16, sous l'action du ressort de rappel qui tend à ramener le volet d'air 5 vers sa position plein ouvert. Sa butée de retour 34, bien que la couronne dentée 12 soit dans l'une de ses positions angulaires extrêmes, n'est pas en contact avec le doigt d'entraînement 15.

La mise en service de la recirculation des gaz se traduit par une rotation de la roue dentée intermédiaire 9. D'une part cette rotation fait tourner la couronne dentée 13 du volet des gaz et éloigne sa première extrémité 62 de la butée basse gaz 32 pour rapprocher sa seconde extrémité 63 de la butée haute gaz 33, sans toutefois l'atteindre ; d'autre part elle fait tourner la roue dentée 12 du volet d'air ce qui, dans un premier temps, rapproche la butée d'entraînement 30 du doigt 15 puis, dans un deuxième temps entraîne celui-ci en rotation jusqu'à ce qu'il vienne en appui contre la butée haute air 31. La situation de la vanne 1 est alors celle représentée sur la figure 7, qui correspond au cas de la figure 2d, avec le volet d'air 5 plein fermé et le volet des gaz 6 plein ouvert.

On remarque sur la figure 7 que la rotation de la roue dentée intermédiaire 9 est bloquée par l'appui du doigt 15 contre la butée haute air 31 et qu'elle ne peut pas poursuivre sa rotation. Dans cette situation l'invention prévoit que la chaîne cinématique des roues dentées soit telle que la seconde extrémité 63 de la couronne dentée 13 n'entre pas en contact avec la butée haute gaz 33, mais qu'un jeu subsiste entre elles. Ce jeu n'a pas vocation à être annulé, tant que la vanne est dans son fonctionnement normal.

La figure 8 représente le fonctionnement de la vanne 1 dans le premier cas évoqué de disfonctionnement, c'est-à-dire celui d'une rupture des dentures dans les cinématiques, d'un problème d'embrayage ou d'une rupture du doigt d'entraînement 15. Il n'y a alors plus de liaison biunivoque entre les engrenages des couronnes dentées 12 et 13. Du fait de la rupture dans l'entraînement du doigt 15 par la roue dentée intermédiaire 9, celui-ci ne vient pas en butée contre la butée haute air, ou s'il s'y trouve, il n'oppose pas de résistance à une poursuite de la rotation de la roue intermédiaire 9. Celle-ci entraîne donc la couronne dentée 13 d'entraînement du volet des gaz au delà de la position plein ouvert du volet de gaz 6 et sa seconde extrémité 63 vient heurter la butée haute gaz 33.

Un capteur de la position du volet des gaz 6, placé quelque part sur la voie EGR, que ce soit sur le volet 6, son axe 61 ou la couronne dentée 13 sera apte à détecter cette rotation supplémentaire de la couronne dentée et à déclencher une alerte de défaillance de la voie Air.

Une méthode de diagnostic du bon fonctionnement de la voie Air peut aussi être mise en place, grâce à une vanne trois-voies configurée selon l'invention. Elle consiste à lancer une rotation de la roue dentée intermédiaire 9 de façon que la couronne dentée 13 d'entraînement du volet des gaz effectue un parcours complet, depuis la position où sa première extrémité 62 est sur la butée basse gaz 32 et où le volet des gaz 6 est en position plein fermée, vers la position de pleine ouverture de ce volet. Dans le cas où la voie Air est saine, la rotation de la roue dentée 9 s'arrêtera lors du contact du doigt d'entraînement 15 avec la butée haute air 31 et le capteur détectera une position du volet des gaz 6 qui correspondant à la position plein ouvert. Dans le cas contraire le doigt ne sera pas entraîné et ne fournira aucun blocage de la roue intermédiaire 9 ; celle-ci entraînera la couronne dentée 13 qui dépassera la position plein ouvert de la vanne des gaz 6 et ne sera stoppée que par la venue de sa seconde extrémité 63 sur la butée haute gaz 33. Par cette rotation excessive le capteur de position du volet des gaz détectera alors la défaillance survenue sur la voie Air. Une telle méthode de diagnostique est effectuée, par exemple, à chaque démarrage du véhicule et une éventuelle défaillance sera signalée au conducteur par une information remontant au tableau de bord.

Un autre moyen de détection d'une défaillance de la voie Air peut être réalisé par la mise en place d'un détecteur de contact entre la seconde extrémité de la couronne dentée 13 et la butée haute gaz 33.

La figure 9 représente la position que l'on donne à la vanne 1 dans le deuxième cas de disfonctionnement évoqué, dans lequel le doigt 15 n'est plus rappelé contre la butée basse air 16. Un tel cas peut, par exemple, survenir à la suite d'une rupture du ressort de rappel ou bien de l'apparition dans la chaîne de commande, d'un point dur que la force exercée par le ressort de rappel ne peut pas vaincre.

Dans ce cas l'actionnement du moteur électrique 7 pour revenir à la position correspondant à la figure 2a entraînera une rotation de la couronne dentée 12 d'entraînement du volet air 5 dans le sens des aiguilles d'une montre et le retour de l'extrémité de son échancrure formant butée de retour 34 vers la butée basse air 16. Ce faisant, cette butée de retour entraîne le doigt 15 en direction de la butée basse air 16, à partir de l'endroit où il se trouve bloqué, et amène le volet d'air 5 dans une position proche de sa position plein ouvert. Autrement dit, on se sert du couple développé par le moteur électrique 7 pour pallier la défaillance du ressort. Le moteur du véhicule peut donc continuer à fonctionner malgré la panne constatée sur le fonctionnement de la vanne trois-voies.

Un jeu est toutefois laissé entre le doigt 15 et la butée basse air 16 pour qu'en fonctionnement normal, la butée de retour 34 ne vienne pas interférer, par exemple sous l'action de vibrations, avec le positionnement du doigt d'entraînement 15.

La figure 10 illustre une variante de réalisation des moyens d'actionnement de la voie air. Dans celle-ci, on trouve le secteur de couronne dentée 12, représenté en transparence, et le ressort de rappel, dont des spires 100 sont partiellement visibles, accompagnés d'une roue de pilotage 50. Cette dernière est liée en rotation au volet air, non-représenté, et libre en rotation par rapport au secteur de couronne dentée 12.

Ladite roue de guidage 50 est apte à être entraînée par ledit secteur de couronne dentée 12, lorsque ledit volet air passe de sa position plein ouvert à sa position plein fermé, et par le ressort de rappel, lorsque ledit volet air est actionné en retour, ceci toujours avec un déphase temporel par rapport au volet des gaz 6, non représenté à cette figure.

Pour cela, ledit secteur de couronne dentée 12 comprend une butée d'entrainement 53, apte à coopérer avec une butée d'entrainement 54 de la roue de pilotage 50, lorsque ledit volet air 5 passe de sa position plein ouvert à sa position plein fermé. Plus précisément, tel qu'illustré à la figure 10, ledit secteur de couronne dentée 12 est configuré pour que sa butée d'entrainement 53 se trouve angulairement en retrait de la butée d'entrainement 54 de la roue de pilotage 50 lors d'une première phase de rotation dudit secteur de couronne dentée 12, correspondant au passage de le vanne de la configuration de la figure 2a à celle de la figure 2b. Les deux butées d'entrainement 53, 54 viennent ensuite en contact et, lors d'une seconde phase de rotation du secteur de couronne dentée 12, ce dernier entraine la couronne de pilotage 50. Autrement dit, lors de cette seconde phase, le volet air est entrainé par le moteur de la vanne de sa position plein ouvert à sa position plein fermé.

Dans le sens de rotation inverse, en mode normal, le ressort entraine la roue de pilotage 50 qui plaque la butée d'entrainement 54 de ladite roue de pilotage contre la butée basse air 16 en position plein ouvert du volet air, tel que cela est illustré à la figure 10. La butée basse air 16 est ici issue de matière du corps de la vanne. La butée d'entrainement 54 présente une extension radiale pour coopérer avec la butée basse air 16.

On observe également à cette figure la butée haute air 31 permettant traiter le premier cas évoqué de disfonctionnement, c'est-à-dire celui d'une rupture des dentures des cinématiques. Ladite butée air haute 31 est ici issue de matière du corps de vanne. Dans ce même but, la roue de pilotage 50 est munie d'une butée de diagnostique 55 et ladite roue de pilotage 50 et ledit corps de vanne sont configurés pour que ladite butée air haute 31 et ladite butée de diagnostique 55 viennent en contact dans ledit premier cas de disfonctionnement.

Afin d'éviter les interférences entre butées, ladite butée de diagnostique 55 est située, par exemple, sur la face de la roue de pilotage 50 opposée à celles munies de la butée d'entrainement 54 et/ou à la périphérie de ladite roue de pilotage 50.

Pour traiter le second cas de disfonctionnement, ledit secteur de couronne dentée 12 comprend ici une butée de rappel 71, apte à coopérer avec une butée de rappel 52 de la roue de pilotage 50 dans le cas d'une défaillance desdits moyens de rappel.

Comme dans le précédent mode de réalisation, lesdites butées de rappel 51, 52 présente un décalage angulaire lorsque le volet air 5 est dans sa position plein ouvert, telle qu'illustré à la figure 10.

Ladite butée de rappel 52 de la roue de pilotage 50 est ici placée dans le prolongement angulaire de la butée d'entrainement 54 de ladite roue de pilotage et/ou sur la même face de ladite roue que celle-ci. Lesdites butées de rappel 52 et d'entrainement 54 de la roue de pilotage pourront prendre appui l'une sur l'autre à l'aide d'entretoise 56.

L'invention a été décrite avec une vanne trois-voies utilisée dans le cadre d'une boucle EGR, avec ouverture progressive de la voie EGR suivie d'une fermeture, avec un décalage temporel, de la voie Air. Elle peut parfaitement être mise en oeuvre sur tout type de vanne comprenant sur l'une de ses voies un volet entrainé, en mode normal, par un moteur dans un premier sens et pas un ressort de rappel dans un second sens, afin de pallier une défaillance du ressort de rappel. En particulier, elle pourra être utilisée dans une vanne trois-voies, utilisée dans une autre application, avec notamment des sens différents pour l'ouverture et la fermeture des volets.

## Revendications

1. Vanne du type trois-voies comprenant
- une première voie (2) et une seconde voie (3),
- un premier volet (5), disposé dans ladite première voie (2) et un second volet (6) disposé dans la seconde voie (3),
- des moyens de commande (7-10) communs pour les deux volets (5, 6),
- un premier moyen d'actionnement (12, 15, 50) agencé pour être commandé par les moyens de commande (7-10) et entraîner ledit premier volet (5) d'une première position vers une seconde position avec déphasage temporel tel que, dans un premier temps, le premier volet (5) reste dans ladite première position sous l'action de moyens de rappel,
- des second moyens d'actionnement (13), comportant une couronne dentée (13) et étant agencés pour être commandés par les moyens de commande communs (7-11) et entraîner le second volet (6) tel que, durant ledit premier temps, les moyens de commande (7-11) font pivoter le second volet (6) d'une première position vers une seconde position,
le premier moyen d'actionnement (12, 15, 50) comportant un moyen d'entraînement en retour (34, 71) permettant de faire revenir le premier volet (5) vers sa première position sous l'action des moyens de commande (7-10) dans le cas d'une défaillance desdits moyens de rappel,
**caractérisé en ce que** la vanne comporte en outre un capteur de la position du second volet (6) placé quelque part sur la seconde voie (3), que ce soit sur le second volet (6), sur l'axe du second volet (6), ou sur la couronne dentée (13) de sorte qu'il soit apte à détecter une rotation supplémentaire de la couronne dentée (13) et à déclencher une alerte de défaillance de la première voie (2).

2. Vanne selon la revendication 1 dans lequel lesdites première et seconde positions du premier volet (5) sont des positions d'ouverture et de fermeture de la première voie (2).

3. Vanne selon l'une quelconque des revendications 1 ou 2, dans laquelle le premier moyen d'actionnement comporte un secteur de couronne dentée (12).

4. Vanne selon la revendication 3 dans laquelle le premier moyen d'actionnement comporte en outre une roue de pilotage (50), liée en rotation au premier volet et libre en rotation par rapport audit secteur de couronne dentée (12), ladite roue de pilotage (50) étant apte à être entraînée par ledit secteur de couronne dentée (12), lorsque ledit premier volet passe de sa première position à sa seconde position, et par lesdits moyens de rappel, lorsque ledit volet est actionné en retour.

5. Vanne selon la revendication 4 dans lequel ledit secteur de couronne dentée (12) comprend une butée de rappel (71), apte à coopérer avec une butée de rappel (52) de la roue de pilotage (50) dans le cas d'une défaillance desdits moyens de rappel.

6. Vanne selon la revendication 5 dans lequel ledit secteur de couronne dentée comprend une butée d'entrainement (53), apte à coopérer avec une butée d'entrainement (54) de la roue de pilotage (50), lorsque ledit premier volet passe de sa première position à sa seconde position, lesdites butées de rappel (52) et d'entrainement (54) de la roue de pilotage prenant appui l'une sur l'autre.

7. Vanne selon l'une quelconque des revendications précédentes, dans laquelle le moyen d'entrainement en retour (34, 71) positionne le premier volet en retrait par rapport à sa première position lorsque les moyens de commande (7-10) sont actionnés pour pallier une défaillance desdits moyens de rappel.

8. Vanne selon l'une quelconque des revendications précédentes dans laquelle, les premier et second moyens d'actionnement (12, 13, 15, 50) sont en outre agencés pour que, dans un second temps, lesdits moyens de commande, tout en continuant de faire pivoter le second volet (6) de sa première position vers sa seconde position par l'intermédiaire du second moyen d'actionnement (13) commencent à faire pivoter le premier volet (5) de sa première position vers sa seconde position par l'intermédiaire du premier moyen d'actionnement (12, 15, 50).

9. Vanne selon l'une quelconque des revendications précédentes, dans laquelle les volets (5, 6) sont disposés dans ses deux voies d'entrée (2, 3), la vanne étant alors une vanne de boucle EGR pour côté froid, reliée au collecteur d'admission d'un moteur à combustion interne d'un véhicule automobile.

## Patentansprüche

1. Dreiwegeventil, das Folgendes umfasst
- einen ersten Kanal (2) und einen zweiten Kanal (3),
- eine erste Klappe (5), die in dem ersten Kanal (2) angeordnet ist, und eine zweite Klappe (6), die in dem zweiten Kanal (3) angeordnet ist,
- gemeinsame Steuermittel (7-10) für die zwei Klappen (5, 6),
- ein erstes Betätigungsmittel (12, 15, 50), das eingerichtet ist, um von den Steuermitteln (7-10) gesteuert zu werden und die erste Klappe (5) von einer ersten Position zu einer zweiten Position mit zeitlicher Verschiebung derart anzutreiben, dass die erste Klappe (5) unter der Einwirkung von Rückstellmitteln während einer ersten Zeit in der ersten Position bleibt,
- zweite Betätigungsmittel (13), die einen Zahnkranz (13) umfassen und eingerichtet sind, um von den gemeinsamen Steuermitteln (7-11) gesteuert zu werden und die zweite Klappe (6) derart anzutreiben, dass die Steuermittel (7-11) während der ersten Zeit die zweite Klappe (6) von einer ersten Position zu einer zweiten Position schwenken lassen,
wobei das erste Betätigungsmittel (12, 15, 50) ein Rücklaufantriebsmittel (34, 71) umfasst, das es erlaubt, die erste Klappe (5) zu ihrer ersten Position unter Einwirkung der Steuermittel (7-10) in dem Fall eines Versagens der Rückstellmittel zurückkehren zu lassen,
**dadurch gekennzeichnet, dass** das Ventil außerdem einen Positionssensor der zweiten Klappe (6) umfasst, der irgendwo auf dem zweiten Kanal (3) platziert ist, entweder auf der zweiten Klappe (6), auf der Achse der zweiten Klappe (6) oder auf dem Zahnkranz (13), so dass er geeignet ist, eine zusätzliche Drehung des Zahnkranzes (13) zu erfassen und eine Versagenswarnung des ersten Kanals (2) auszulösen.

2. Ventil nach Anspruch 1, wobei die erste und die zweite Position der ersten Klappe (5) Öffnungs- und Schließpositionen des ersten Kanals (2) sind.

3. Ventil nach einem der Ansprüche 1 oder 2, wobei das erste Betätigungsmittel einen Zahnkranzsektor (12) umfasst.

4. Ventil nach Anspruch 3, wobei das erste Betätigungsmittel außerdem ein Steuerrad (50) umfasst, das in Drehung mit der ersten Klappe verbunden und in Drehung in Bezug auf den Zahnkranzsektor (12) frei ist, wobei das Steuerrad (50) geeignet ist, von dem Zahnkranzsektor (12) angetrieben zu werden, wenn die erste Klappe von ihrer ersten Position zu ihrer zweiten Position übergeht, und von den Rückstellmittel, wenn die Klappe in Rücklauf betätigt wird.

5. Ventil nach Anspruch 4, wobei der Zahnkranzsektor (12) einen Rückstellanschlag (71) umfasst, der geeignet ist, mit einem Rückstellanschlag (52) des Steuerrads (50) im Fall eines Versagens der Rückstellmittel zusammenzuwirken.

6. Ventil nach Anspruch 5, wobei der Zahnkranzsektor einen Antriebsanschlag (53) umfasst, der geeignet ist, mit einem Antriebsanschlag (54) des Steuerrads (50) zusammenzuwirken, wenn die erste Klappe von ihrer ersten Position zu ihrer zweiten Position übergeht, wobei der Rückstellanschlag (52) und der Antriebsanschlag (54) des Steuerrads sich aufeinander stützen.

7. Ventil nach einem der vorhergehenden Ansprüche, wobei das Rücklaufantriebsmittel (34, 71) die erste Klappe in Rücksprung in Bezug auf ihre erste Position positioniert, wenn die Steuermittel (7-10) betätigt werden, um einem Versagen der Rückstellmittel abzuhelfen.

8. Ventil nach einem der vorhergehenden Ansprüche, wobei das erste und das zweite Betätigungsmittel (12, 13, 15, 50) außerdem eingerichtet sind, damit die Steuermittel in einer zweiten Zeit, während sie die zweite Klappe (6) weiterhin von ihrer ersten Position zu ihrer zweiten Position über das zweite Betätigungsmittel (13) schwenken lassen, beginnen, die erste Klappe (5) von ihrer ersten Position zu ihrer zweiten Position über das erste Betätigungsmittel (12, 15, 50) schwenken zu lassen.

9. Ventil nach einem der vorhergehenden Ansprüche, wobei die Klappen (5, 6) in seinen zwei Eingangskanälen (2, 3) angeordnet sind, wobei das Ventil daher ein EGR-Schleifenventil auf der kalten Seite ist, das mit dem Ansaugsammler einer Brennkraftmaschine eines Kraftfahrzeugs verbunden ist.

## Claims

1. Valve of three-way type comprising
- a first pathway (2) and a second pathway (3),
- a first flap (5), arranged in said first pathway (2) and a second flap (6) arranged in the second pathway (3),
- control means (7-10) common to the two flaps (5, 6),
- a first actuation means (12, 15, 50) arranged to be controlled by the control means (7-10) and drive said first flap (5) from a first position to a second position with temporal phase shift such that, in a first stage, the first flap (5) remains in said first position under the action of return means,
- second actuation means (13), comprising a toothed crown ring (13) and being arranged to be controlled by the common control means (7-11) and drive the second flap (6) such that, during said first stage, the control means (7-11) pivot the second flap (6) from a first position to a second position,
the first actuation means (12, 15, 50) comprising a return driving means (34, 71) making it possible to return the first flap (5) to its first position under the action of the control means (7-10) in the case of a failure of said return means,
- **characterized in that** the valve further comprises a sensor for detecting the position of the second flap (6), placed somewhere along the second pathway (3), whether on the second flap (6), on the axis of the second flap (6) or on the toothed crown ring (13), such that it is able to detect an additional rotation of the toothed crown ring (13) and trigger an alert signalling failure of the first pathway (2).

2. Valve according to Claim 1, in which said first and second positions of the first flap (5) are open and closed positions of the first pathway (2).

3. Valve according to either one of Claims 1 and 2, in which the first actuation means includes a toothed crown ring segment (12).

4. Valve according to Claim 3, in which the first actuation means also includes a guide wheel (50), linked in rotation to the first flap and free in rotation relative to said toothed crown ring segment (12), said guide wheel (50) being able to be driven by said toothed crown ring segment (12) when said first flap switches from its first position to its second position, and by said return means, when said flap is actuated to return.

5. Valve according to Claim 4, in which said toothed crown ring segment (12) comprises a return end-stop (71) capable of cooperating with a return end-stop (52) of the control wheel (50) in the case of a failure of said return means.

6. Valve according to Claim 5, in which said toothed crown ring segment comprises a driving end-stop (53), capable of cooperating with a driving end-stop (54) of the control wheel (50), when said first flap switches from its first position to its second position, said return (52) and driving (54) end-stops of the control wheel bearing on one another.

7. Valve according to any one of the preceding claims, in which the return driving means (34, 71) positions the first flap set back relative to its first position when the control means (7-10) are actuated to mitigate a failure of said return means.

8. Valve according to any one of the preceding claims, in which the first and second actuation means (12, 13, 15, 50) are also arranged so that, in a second stage, said control means, while continuing to pivot the second flap (6) from its first position to its second position via the second actuation means (13), begin to pivot the first flap (5) from its first position to its second position via the first actuation means (12, 15, 50).

9. Valve according to any one of the preceding claims, in which the flaps (5, 6) are arranged in its two inlet pathways (2, 3), the valve then being an EGR loop valve for the cold side, linked to the intake manifold of an internal combustion engine of a motor vehicle.
